# EUROPÄISCHE PATENTSCHRIFT

(11) **EP 2 052 218 B1**
(45) Veröffentlichungstag und Bekanntmachung des Hinweises auf die Patenterteilung: **20.04.2016**
(21) Anmeldenummer: 07801742.3
(22) Anmeldetag: 17.08.2007
(51) Int. Cl.: G01D 5/347

(54) **OPTOELEKTRONISCHER WINKELSENSOR UND VERFAHREN ZUR BESTIMMUNG EINES DREHWINKELS UM EINE ACHSE**
OPTOELECTRONIC ANGLE SENSOR AND METHOD FOR DETERMINING A ROTATION ANGLE AROUND AN AXIS
CAPTEUR ANGULAIRE OPTOÉLECTRONIQUE ET PROCÉDÉ DESTINÉ À LA DÉTERMINATION D'UN ANGLE DE ROTATION AUTOUR D'UN AXE

(30) Priorität: 18.08.2006 EP 06119146
(43) Veröffentlichungstag der Anmeldung: 29.04.2009
(73) Patentinhaber: Leica Geosystems AG, 9435 Heerbrugg (CH)
(72) Erfinder: LIPPUNER, Heinz, 9445 Rebstein (CH)
(74) Vertreter: Kaminski Harmann
(86) Internationale Anmeldenummer: PCT/EP2007/007302
(87) Internationale Veröffentlichungsnummer: WO 2008/019876

(56) Entgegenhaltungen:
- EP-A- 1 722 200
- EP-A- 1 790 953
- US-A1- 2002 018 220
- US-B2- 7 145 127

## Beschreibung

Die Erfindung betrifft einen optoelektronischen Winkelsensor zur Bestimmung eines Drehwinkels um eine Achse nach dem Oberbegriff des Anspruchs 1.

Das Bestimmen von Richtungen, Winkeln und Längen als Lagen ist in vielen Anwendungsbereichen, wie beispielsweise in der geodätischen und industriellen Vermessung, gefordert. Entwicklungen in der Winkelmesstechnik führen über mechanische Ablesevorgänge bis zur vollautomatisierten Winkelmessung nach dem heutigen Stand der Technik.

Bekannte Abtastverfahren sind elektronisch-magnetische, elektronische und optoelektronische Verfahren. Die folgenden Ausführungen beziehen sich auf optoelektronische Abtasteinrichtungen.

Übliche optoelektronische Winkelsensoren zum Bestimmen eines Drehwinkels um eine Achse weisen einen Codeträger und einen optischen Detektor auf, die relativ zueinander drehbar sind. Der optische Detektor ist beispielsweise ein Photodetektor, ein CCD-Zeilen-Array oder ein CCD-Flächen-Array. Der Codeträger ist im Allgemeinen als Kreisscheibe oder als Kreisring ausgebildet und trägt entlang seines Umfangs einen optisch erfassbaren Positionscode, von dem ein Ausschnitt durch eine Beleuchtungseinrichtung auf den Detektor abgebildet wird. Im Allgemeinen dreht sich dabei der Codeträger des Winkelsensors. Es ist jedoch ebenso möglich, den Codeträger feststehend und den Detektor drehend auszubilden.

Zur Bestimmung beispielsweise von Winkelstellungen von 0° bis 360° kann die Codierung in einem Vollkreis angeordnet sein und z.B. dunkle und helle Bereiche aufweisen. Die Winkelauflösung des Vollkreises bestimmt sich nach Art der Codierung und nach der zum Lesen der Codierung eingesetzten Abtasteinrichtung. So wird beispielsweise durch Aufbringen eines Codes in mehreren Spuren oder durch eine feinere Teilung des Codes die Winkelauflösung gesteigert, wobei die erreichbare Auflösung aus fertigungs- und kostentechnischen Gründen beschränkt ist.

Die US 2002/0018220 A1 offenbart eine Messapparatur zur Bestimmung einer Verrückung eines Codeträgers, wobei als Detektor eine Detektorfolie mit organischen Photodetektoren und organischen Transistoren über dem relativ dazu verrückbaren Codeträger, der einen auslesbaren Code aufweist, angebracht wird. Zur Beleuchtung und Erzeugung eines Bildes des Codes ist hinter der Detektorfolie eine Lumineszenzfolie mit organischen LEDs angeordnet, die einen Teil des Codes beleuchtet und somit ein auswertbares Bild dessen auf der Detektorfolie erzeugt.

Lumineszenzfolien sind seit langem bekannt. Sie werden zum Beispiel auch für Displaybeleuchtungen, Dünnschichttransistor-Displays oder als Grafikelemente für Werbezwecke verwendet und weisen beispielsweise eine Vielzahl von organischen LEDs auf, wobei diese wenig aufwändig und in grossen Mengen herstellbar sind.

Als Nachteile von Winkelsensoren des Standes der Technik ist ein komplexes und mit hoher Präzision zu erfolgendes Anordnen des Detektors, des Codeträgers und der Beleuchtungseinrichtung bekannt, wobei der Detektor und die Beleuchtungseinrichtung üblicherweise jeweils auf einer eigenen mit Strom zu versorgenden Platine angeordnet sind. Eine Möglichkeit zur Realisierung eines einfacheren Aufbaus und zur Verringerung der Anzahl an mit elektrischem Strom versorgten Platinen ist ein Anordnen der Beleuchtungseinrichtung und des Detektors auf einer gemeinsamen Platine, wobei beispielsweise durch einen als Umlenkmittel ausgebildeten Codeträger ein von dessen Drehlage abhängiges Bild des Codes auf die Empfangsbereiche des Detektors projiziert wird, was beispielsweise in der US 7,145,127 B2 offenbart ist.

Das Dokument EP1790953 offenbart einen Winkelsensor gemäß den Stand der Technik.

Ebenso ist zur Behebung von bei Winkelsensoren des Standes der Technik bekannten Fehlern und Ungenauigkeiten, wie beispielsweise Rundlaufungenauigkeiten des Codeträgers, eine aufwändige und fortlaufende rechnerische Nachbearbeitung der aus dem Bild des Codes ermittelten Daten zur Bestimmung der Winkellage erforderlich. Alternativ dazu gibt es Bestrebungen, solchen Fehlern und Ungenauigkeiten hardwareseitig zu entgegnen, beispielsweise durch Stellmechanismen zum präzisen Positionieren des Codeträgers, welche sich allerdings als sehr aufwändig herausstellen. So sind im Allgemeinen für eine genaue Winkelmessung nach dem Stand der Technik hohe Anforderungen an die dafür verwendeten Komponenten hinsichtlich ihrer Präzision bei Fertigung und Montage gegeben.

Des Weiteren ist bei Codierungen - bedingt durch eine Auflösung oder Feinheit derselben - nachteilig, dass diese, nachdem sie gefertigt und in einen Winkelsensor eingebaut sind, eine fest bestimmte Genauigkeit aufweisen, mit welcher anhand der jeweiligen Codierung eine Winkellage bestimmbar ist. Auch ist eine inkrementelle Codierung abhängig von ihrer Auflösung nur bis zu einer begrenzten Drehgeschwindigkeit auslesbar. Werden grobe, eine geringere Auflösung aufweisende Codierungen verwendet, kann zwar auch bei schnellen Drehbewegungen des Codeträgers eine Winkellage verfolgt und bestimmt werden, allerdings ist dabei die erreichbare Genauigkeit geringer als bei hoch aufgelösten Codierungen.

Eine Aufgabe der Erfindung ist das Bereitstellen eines verbesserten Winkelsensors, insbesondere mit einem weniger aufwändigen Aufbau desselben.

Eine weitere Aufgabe der Erfindung ist das Bereitstellen einer Codierung, die eine Behebung von Ungenauigkeiten bei der Winkelmessung vereinfacht.

Eine weitere Aufgabe der Erfindung ist es, ein Winkelsensor mit einer Anpassbarkeit und Verbesserung hinsichtlich der Messgenauigkeit, insbesondere im Verhältnis zu einer maximal für eine relevante Messung erlaubten Rotationsgeschwindigkeit des Drehelements wie z.B. des Codeträgers, bereitzustellen.

Diese Aufgaben werden erfindungsgemäss durch die kennzeichnenden Merkmale des unabhängigen Anspruchs gelöst. Vorteilhafte und alternative Ausgestaltungen und Weiterbildungen des Lagemessverfahrens und der Lagemesseinrichtung ergeben sich aus den Merkmalen der Unteransprüche.

Ein erfindungsgemässer optoelektronischer Winkelsensor weist einen Codeträger mit einer flächigen Codierung und einen photosensitiven Detektor auf, wobei der Codeträger relativ zum Detektor um eine Achse drehbar angeordnet ist. Im Gegensatz zu Winkelsensoren des Standes der Technik, bei welchen üblicherweise eine Beleuchtungseinrichtung zur Erzeugung eines auswertbaren Bildes der Codierung auf dem Detektor angeordnet sind, ist erfindungsgemäss die Codierung selbstleuchtend ausgebildet. Dadurch stellt die Codierung selbst eine Einrichtung zum Erzeugen eines hinsichtlich einer relativen Drehlage des Codeträgers zum Detektor auswertbaren Bildes mindestens eines Teiles der Codierung auf dem Detektor dar.

Des Weiteren weist der Winkelsensor eine Auswerteeinheit auf, die mittels eines Auslesens des Bildes die Lage des Codeträgers relativ zum Detektor und somit den zu messenden Winkel um die Achse bestimmt.

Gemäss der Erfindung kann somit auf eine zusätzliche aufwändig anzuordnende Beleuchtungseinrichtung verzichtet werden.

Als selbstleuchtende Codierung ist hierbei eine Codierung, die zum Emittieren von optischer Strahlung, insbesondere Licht im sichtbaren oder nahen infraroten Bereich, ausgebildet ist, zu verstehen.

Die flächige Codierung kann sämtliche aus dem Stand der Technik bekannten Muster aufweisen. In einer einfachen Ausbildungsform besteht die Codierung aus dunklen, nicht leuchtenden Bereichen und aus leuchtenden Bereichen. Grundsätzlich können sämtliche selbstleuchtende Mittel Anwendung finden, die eine codierte optische Abbildung in Abhängigkeit von der Drehlage des Codeträgers relativ zum Detektor erzeugen. Ebenso kann die Codierung auch Bereiche aufweisen, die Licht mit unterschiedlichen Wellenlängen emittiert.

Es besteht die Möglichkeit, sowohl eine absolute Codierung, als auch eine relative, d.h. inkrementelle, Codierung zu verwenden. Allerdings besteht bei relativen Codierungen der Nachteil, nach einem Stromausfall den Winkelmesser neu initialisieren zu müssen.

Insbesondere kann die selbstleuchtende Codierung mit einer Elektrolumineszenz-Folie, auch bekannt als Leuchtfolie oder Lumineszenzfolie, realisiert werden und beispielsweise eine Vielzahl von organischen LEDs aufweisen.

Zur Steuerung der Codierung kann der Winkelsensor insbesondere eine Steuereinheit aufweisen, sodass eine beispielsweise durch eine Elektrolumineszenz-Folie erzeugte Codierung frei konfiguriert und insbesondere auch rekonfiguriert werden kann.

Beispielsweise können dabei mehrere auswählbare Modi gespeichert sein, welche unterschiedliche Codierungsmuster aufweisen. Je nach Anforderung an eine Winkelmessung kann dadurch beispielsweise durch einen Benutzer eine jeweils dafür geeignete Codierung gewählt und für die Winkelmessung verwendet werden. Insbesondere können sich die verschiedenen Codierungsmuster in ihrer Auflösung unterscheiden, sodass der Winkelsensor an eine geforderte Messgenauigkeit anpassbar ist.

Ebenso können beispielsweise bekannte und baulich bedingte Messfehler und Ungenauigkeiten, wie z.B. Rundlaufungenauigkeiten bei der relativen Drehbewegung des Codeträgers zum Detektor, direkt durch eine Rekonfiguration der Codierung berücksichtigt und somit diesen entgegengewirkt werden. Eine bei Winkelsensoren des Standes der Technik erforderliche fortlaufende Nachbearbeitung ist dann nicht mehr nötig, da die Codierung direkt anpassbar ausgebildet ist.

Des Weiteren kann die Codierung als ein Modus z.B. ein spezielles Muster zur einfachen und schnellen Initialisierung des Winkelsensors aufweisen, sodass zuverlässig und schnell eine Nulllage ermittelbar ist und sofort darauf mit den Messungen von Winkeln begonnen werden kann.

Insbesondere kann eine ereignisgesteuerte oder zeitgesteuerte automatische Umschaltung zwischen vorgegebenen Modi erfolgen. Beispielsweise wird für eine grobe Winkelbestimmung zuerst eine gering aufgelöste Codierung in einem ersten Modus verwendet und daraufhin automatisch in einen zweiten Modus mit hoch aufgelöster Codierung umgeschaltet. Ebenso kann zu vorgegebenen Zeitpunkten jeweils eine automatisch erfolgende Kalibrierung in einem Kalibrierungsmodus erfolgen.

Der Codeträger kann gemäss sämtlichen nach dem Stand der Technik bekannten Formen und aus dem Fachmann bekannten Materialien, wie z.B. Kunststoff, ausgebildet sein. Insbesondere weist er eine Form mit kreisförmigem Querschnitt auf, z.B. die Form einer Kreisscheibe, eines Rings, eines Zylinders oder eines Hohlzylinders. Ebenso kann der Codeträger als Kreissegment ausgebildet sein.

Als Detektoren können, wie aus dem Stand der Technik bekannt, insbesondere Sensorarrays, wie beispielsweise in einer Zeile aufgereihte Fotodioden, CCD- oder CMOS-Sensoren, aber auch Flächensensoren mit flächig angeordneten Fotodioden, CCD-, CMOS- oder PSD-Sensoren, verwendet werden. Ebenso möglich ist ein Verwenden von Detektor- oder Abtastfolien, insbesondere mit organischen Photodetektoren, z.B. Photodioden, und organischen Transistoren.

Ein Einsatzbereich für erfindungsgemässe Winkelsensoren sind geodätische Messinstrumente mit der Funktion der Richtungs- und Winkelbestimmung. So sind beispielsweise Theodoliten mit horizontalem und vertikalem Teilkreis und entsprechenden Ableseeinrichtungen ausgestattet, um Horizontal- und Vertikalwinkel mit höchster Genauigkeit messen zu können. Ebenso finden Lagemesseinrichtungen in Messmaschinen aller Art, wie z.B. Koordinatenmessmaschinen mit Gelenkarmen, Anwendung.

Das erfindungsgemässe Verfahren wird nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: einen Codeträger mit einer erfindungsgemässen selbstleuchtenden Codierung;
- Fig. 2: eine erste Ausführungsform eines erfindungsgemässen Winkelsensors;
- Fig. 3: eine zweite Ausführungsform eines erfindungsgemässen Winkelsensors;
- Fig. 4: eine dritte Ausführungsform eines erfindungsgemässen Winkelsensors;
- Fig. 5: eine vierte Ausführungsform eines erfindungsgemässen Winkelsensors; und
- Fig. 6a-b: ein Codeträger mit - gemäss der Erfindung - zwei verschieden konfigurierten Codierungen.

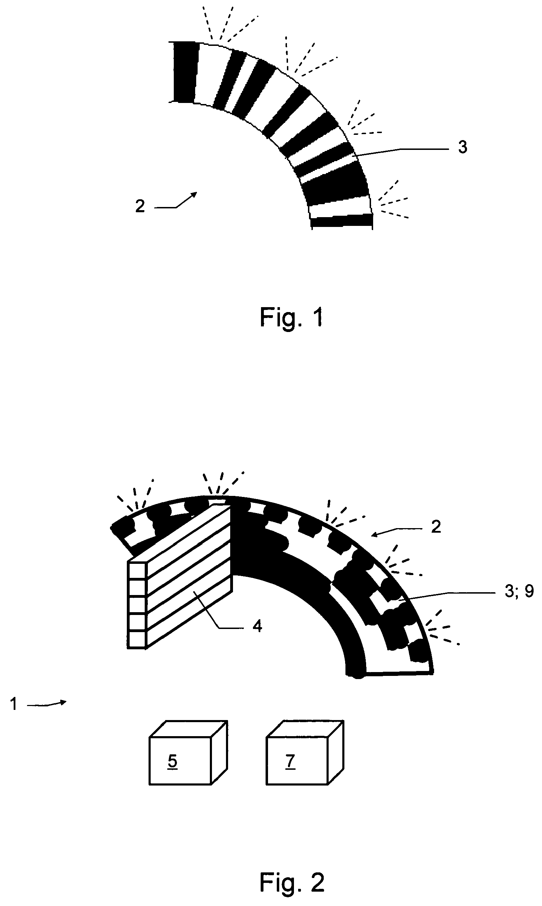

Figur 1 zeigt einen ringförmig ausgebildeten Codeträger 2 mit einer darauf aufgebrachten flächigen Codierung 3, die selbstleuchtend ausgebildet ist.

Die Codierung 3 ist als dünnfilmiges, flächiges Element mit einer Vielzahl von organischen LEDs ausgebildet und auf den Codeträger 2 aufgebracht. Alternativ kann die Codierung 3 allerdings auch aus weiteren dem Fachmann bekannten Leuchtfolien ausgebildet sein.

Des Weiteren besteht die Möglichkeit, die Codierung 3 auf dem Codeträger 2 aufzubringen oder direkt in den Codeträger 2 zu integrieren. Die Integration beispielsweise von organischen LEDs in den Codeträger 2 hat den Vorteil, diese dadurch vor dem für organische LEDs zerstörerisch wirkenden Sauerstoff zu schützen und somit ihre Lebensdauer zu erhöhen.

Als weitere Möglichkeit um die Codierung zu schützen kann - wie dem Fachmann bekannt - diese auch beschichtet werden.

Wie in Figur 1 dargestellt weist die Codierung 3 beispielsweise abwechselnd leuchtende Bereiche und dunkle Bereiche in einer Spur entlang des Umfangs des Codeträgers 2 auf.

In Figur 2 ist ein erfindungsgemässer optoelektronischer Winkelsensor 1 mit einem ringförmigen Codeträger 2, der eine flächige selbstleuchtende Codierung 3 aufweist, dargestellt. Ein Detektor 4 mit einer Zeile von photosensitiven Empfangsbereichen ist dem Codeträger 2 gegenüberliegend angeordnet, sodass der Detektor 4 eine durch die Codierung 3 emittierte Strahlung empfangen kann, wobei der Codeträger 2 relativ zum Detektor 4 um eine Achse drehbar ausgebildet ist.

Die Codierung 3 weist leuchtende und nicht leuchtende Flächen, die in mehreren Spuren in Umfangsrichtung des Codeträgers 2 angeordnet sind, auf. Durch das Verwenden von mehreren Spuren wird die Auflösung der Codierung erhöht, wodurch eine Winkellage genauer bestimmbar ist. Dazu empfängt jedes photosensitive Element des Detektors 4 die durch die Codierung 3 emittierte Strahlung jeweils der gegenüberliegenden Spur, wodurch ein auswertbares und Informationen über die relative Winkellage des Codeträgers 2 aufweisendes Bild eines Teiles der Codierung 3 auf dem Detektor 4 erzeugt wird. Somit stellt die Codierung 3 selbst eine Einrichtung 9 zum Erzeugen des Bildes auf dem Detektor 4 dar, wohingegen bei Winkelsensoren des Standes der Technik zur Erzeugen eines Bildes der Codierung diese durch eine weitere Komponente beleuchtet wird.

Aus den durch die photosensitiven Elemente des Detektors 4 in Abhängigkeit ihrer Beleuchtung erzeugten Signalen berechnet dann eine Auswerteeinheit 5 die zu messende Winkellage des Codeträgers 3.

Die Codierung 3 ist beispielsweise frei konfigurierbar und insbesondere zusätzlich rekonfigurierbar ausgebildet, sodass z.B. ein Muster, eine Auflösung oder eine Winkelnullstellung der Codierung 3 verändert werden kann.

Dazu weist der Winkelsensor 1 insbesondere eine Steuereinheit 7 zum Steuern der leuchtenden und nicht leuchtenden Bereiche der Codierung 3 und/oder der Art des Leuchtens - beispielsweise hinsichtlich der Wellenlänge der emittierten Strahlung - auf.

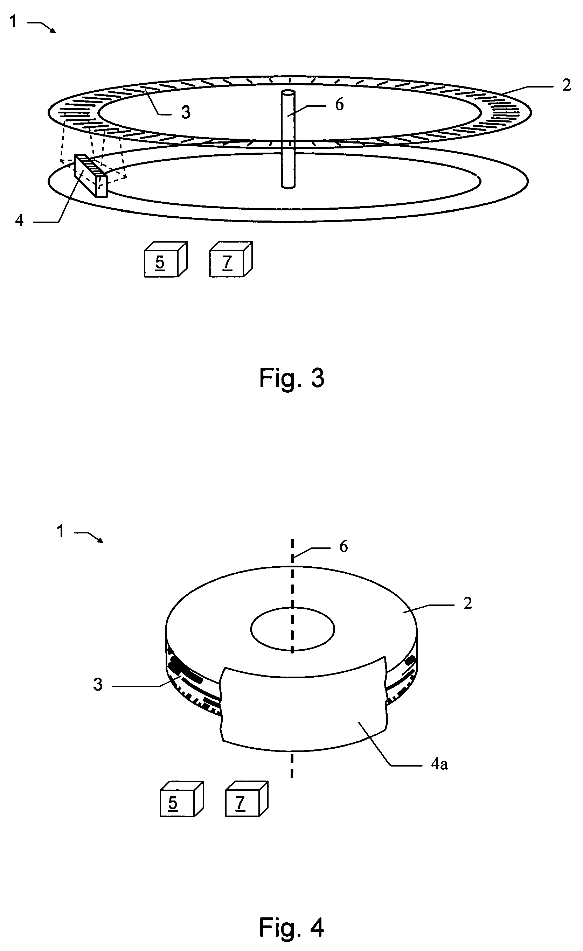

Figur 3 zeigt eine weitere Ausführungsform der Erfindung, wobei die Codierung 3 entlang des vollen Umfangs eines als Ring ausgebildeten Codeträgers 2 angebracht ist, sodass Winkelstellungen von 0° bis 360° bestimmbar sind. Der Codeträger 2 ist dabei um eine Achse 6 drehbar ausgebildet, wobei der Detektor 4 fix angeordnet ist.

Erfindungsgemäss ist die Codierung 3, die durch die Steuereinheit 7 gesteuert wird, selbstleuchtend ausgebildet, sodass diese direkt ein Bild eines Teiles der Codierung 3 auf dem Detektor 4 erzeugt.

Anhand eines Auswertens des Bildes leitet die Auswerteeinheit 5 die relative Winkelstellung des Codeträgers 2 zum Detektor 4 und somit den zu messenden Winkel um die Achse 6 ab.

In Figur 4 ist ein erfindungsgemässer Winkelsensor 1 mit einem zylinderförmigen Codeträger 2, der um die Achse 6 relativ zum Detektor rotatorisch bewegbar ist, dargestellt.

Die erfindungsgemäss selbstleuchtende Codierung 3 ist an der Aussenmantelfläche des Codeträgers 2 angebracht und wird von einer als photosensitiver Detektor ausgebildeten Abtastfolie 4a, die insbesondere organische Photodioden oder Photozellen aufweist, umschlossen. Insbesondere kann die Abtastfolie 4a die gesamte Mantelfläche des Codeträgers 2 umfassen, sodass durch das Leuchten der Codierung 3 ein ganzheitliches Bild der Codierung 3 auf der Abtastfolie 4a erzeugt wird. Anhand des Bildes wird - wie oben beschrieben - durch die Auswerteeinheit 5 die Winkelstellung des Codeträgers 2 relativ zur Abtastfolie 4a und dadurch der zu messende Winkel ermittelt.

Zur Steuerung der Codierung 3 weist der Winkelsensor 1 wieder eine Steuereinheit 7 auf, in welcher z.B. zwei Modi gespeichert sind. In einem Initialisiermodus steuert beispielsweise die Steuerkomponente 7 die selbstleuchtende Codierung 3 so, dass nur an einer Stelle, z.B. der Nulllage, ein Bereich der Codierung 3 leuchtet und die Restfläche der Codierung 3 nicht leuchtet, wodurch schnell und präzise eine Nulllage des Winkelsensors 1 ermittelbar ist. In einem Messmodus kann anschliessend z.B. eine hoch auflösende und für eine exakte Winkelmessung geeignete Codierung 3 angezeigt werden.

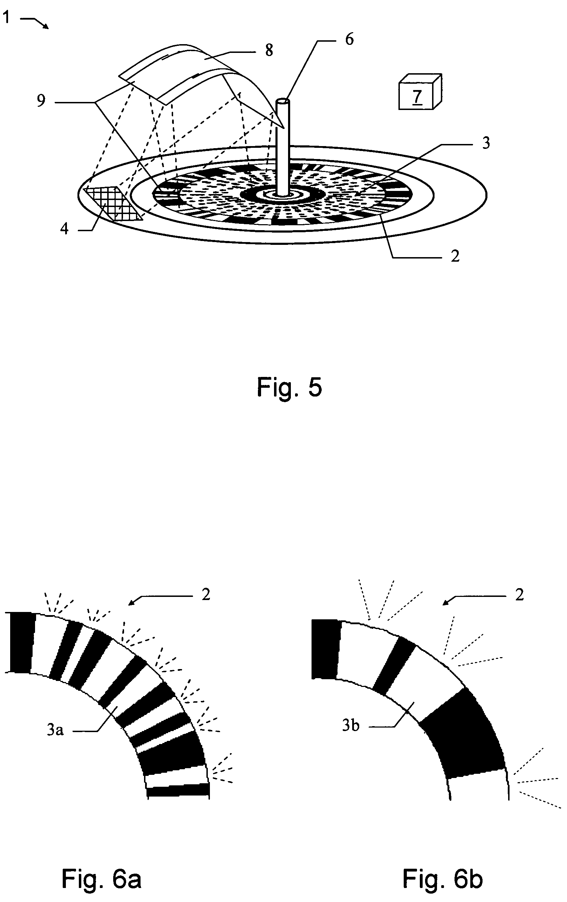

Figur 5 zeigt eine weitere alternative Ausführungsform eines erfindungsgemässen Winkelsensors 1. Dabei ist der photosensitive Detektor 4 und der als Kreisscheibe ausgebildete Codeträger 2 auf einer gemeinsamen Ebene angeordnet, wobei der Codeträger 2 um die Achse 6 drehbar und der Detektor 4 fix angebracht sind.

Die selbstleuchtende Codierung 3 ist auf der gesamten Kreisfläche der Codeträgerscheibe aufgebracht und kann durch die Steuereinheit 7 frei konfiguriert und rekonfiguriert werden.

Da im Allgemeinen der Detektor eine höhere Auflösung aufweist als jene die für die Codierung 3 erreicht werden kann, kann es aus Gründen einer Miniaturisierung vorteilhaft sein, die photosensitive Fläche des Detektors 4 kleiner auszubilden als die des darauf abzubildenden Teiles der Codierung. Dazu wird ein Umlenkelement 8 angeordnet, sodass die jeweils durch eine Teilfläche der Codierung emittierte Strahlung auf die Detektorfläche umgelenkt und darauf fokussiert wird. Dadurch kann ein fokussiertes, auswertbares Bild der Codierung, welches Informationen über die Winkelstellung des Codeträgers 2 relativ zum Detektor 4 beinhaltet, erzeugt werden. Zusätzlich kann dabei die durch den Detektor 4 empfangene Strahlung intensiviert werden, wodurch ein schnelleres Auslesen des Codes erreicht werden kann.

Das Umlenkelement 8 kann dazu beispielsweise refraktive, diffraktive oder reflektierende Elemente, wie beispielsweise eine gekrümmte Spiegelfläche, aufweisen. Figuren 6a und 6b zeigen einen Codeträger 2 mit einer erfindungsgemäss selbstleuchtenden, rekonfigurierbaren Codierung mit verschiedenen Modi. In Figur 6a ist dabei die Codierung in einem Feinmodus mit einer ersten Codierungskonfiguration 3a gezeigt, wobei die Codierung eine hohe Auflösung zum präzisen Bestimmen der Winkellage aufweist. In Figur 6b ist dagegen die Codierung in einem Grobmodus mit einer zweiten Codierungskonfiguration 3b gezeigt, wobei die Codierung nun eine geringere Auflösung aufweist und somit die zu messende Winkelstellung auch bei sehr schnellen Drehbewegungen des Codeträgers verfolgbar ist.

Es versteht sich, dass diese dargestellten Figuren nur mögliche Ausführungsbeispiele schematisch darstellen. Die verschiedenen Ansätze können erfindungsgemäss miteinander sowie mit Winkelsensoren des Stands der Technik kombiniert werden.

## Patentansprüche

1. Optoelektronischer Winkelsensor (1) zur Bestimmung eines Drehwinkels um eine Achse (6) mit
• einem Codeträger (2) mit einer flächigen Codierung (3),
• einem photosensitiven Detektor (4),
wobei der Codeträger (2) und der Detektor (4) relativ zueinander um die Achse (6) bewegbar sind,
• einer Einrichtung (9) zur Erzeugung eines auswertbaren Bildes mindestens eines Teiles der Codierung auf dem Detektor (4) derart, dass das Bild eine Information über eine Drehlage des Codeträgers (2) zum Detektor (4) beinhaltet, und
• einer Auswerteeinheit (5) zur Bestimmung des Drehwinkels aus dem Bild,
**dadurch gekennzeichnet, dass**
die Codierung (3) selbstleuchtend und frei konfigurierbar durch eine Steuereinheit (7) des optoelektronischen Winkelsensors (1) und rekonfigurierbar ausgebildet ist und somit selbst mindestens teilweise die Einrichtung (9) zur Erzeugung eines auswertbaren Bildes dargestellt.

2. Optoelektronischer Winkelsensor (1) nach Anspruch 1,
**dadurch gekennzeichnet, dass**
die Codierung (3) eine Vielzahl von organischen Leuchtdioden aufweist.

3. Optoelektronischer Winkelsensor (1a,1b) nach Anspruch 1 oder 2,
**dadurch gekennzeichnet, dass**
die Codierung (3) als Elektrolumineszenz-Folie ausgebildet ist.

4. Optoelektronischer Winkelsensor (1) nach einem der vorangehenden Ansprüche,
**gekennzeichnet durch**
die Codierung (3) ein Muster aus leuchtenden und nicht leuchtenden Bereichen aufweist.

5. Optoelektronischer Winkelsensor (1) nach einem der vorangehenden Ansprüche,
**gekennzeichnet durch**
die Codierung (3) ein Muster aufweist mit Bereichen, in welchen Licht mit unterschiedlichen Wellenlängen emittiert wird.

6. Optoelektronischer Winkelsensor (1) nach einem der vorangehenden Ansprüche,
**dadurch gekennzeichnet, dass**
eine Änderung eines Musters der Codierung (3) zeitgesteuert, ereignisgesteuert und/oder anforderungsabhängig, insbesondere abhängig von einer Drehgeschwindigkeit bei einer Bewegung des Codeträgers (2) relativ gegen den Detektor (4), erfolgt.

7. Optoelektronischer Winkelsensor (1) nach einem der vorangehenden Ansprüche,
**dadurch gekennzeichnet, dass**
eine Änderung eines Musters der Codierung (3) hinsichtlich
• einer Wellenlänge des emittierten Lichts und/oder
• einer Auflösung der Codierung (3) erfolgt.

8. Optoelektronischer Winkelsensor (1) nach einem der vorangehenden Ansprüche,
**dadurch gekennzeichnet, dass**
der Winkelsensor (1) mehrere wahlweise einstellbare Modi aufweist, wobei für jeden der Modi die Codierung unterschiedlich konfiguriert ist.

9. Optoelektronischer Winkelsensor (1) nach Anspruch 8,
**dadurch gekennzeichnet, dass**
ein Winkelsensor-Initialisier-Modus als einer der mehreren Modi vorgesehen ist, in welchem die Codierung (3) ein speziell zur Festlegung einer Winkel-Nulllage geeignetes Muster aufweist.

10. Optoelektronischer Winkelsensor (1) nach einem der vorangehenden Ansprüche,
**dadurch gekennzeichnet, dass**
eine Rekonfiguration der Codierung (3) zur Kompensation von bekannten Messfehlern, insbesondere bedingt durch Rundlaufungenauigkeiten bei einer Drehbewegung des Codeträgers (2) relativ gegen den Detektor (4), vorgesehen ist.

11. Optoelektronischer Winkelsensor (1) nach einem der vorangehenden Ansprüche,
**gekennzeichnet durch**
die Einrichtung (9) zusätzlich ein Umlenkmittel (8) zur umgelenkten Projektion des Bildes auf den Detektor (4) aufweist.

12. Optoelektronischer Winkelsensor (1) nach Anspruch 11,
**dadurch gekennzeichnet, dass**
das Umlenkmittel (8) zur Fokussierung des Bildes auf den Detektor (4) ausgebildet ist.

13. Optoelektronischer Winkelsensor (1) nach einem der vorangehenden Ansprüche,
**dadurch gekennzeichnet, dass**
der Detektor (4) als Abtastfolie (4a), insbesondere mit organischen Photodioden oder Photozellen, ausgebildet ist.

## Claims

1. Optoelectronic angle sensor (1) for determining a rotational angle about an axis (6), comprising
• a code carrier (2) having a planar coding (3),
• a photosensitive detector (4), the code carrier (2) and the detector (4) being moveable relative to one another about the axis (6),
• a device (9) for generating an evaluable image of at least a part of the coding on the detector (4) in such a way that the image comprises information about the rotational position of the code carrier (2) relative to the detector (4), and
• an evaluation unit (5) for determining the rotational angle from the image,
**characterized in that** the coding (3) is formed so as to be luminescent and freely configurable by means of a control unit (7) of the optoelectronic angle sensor (1) and reconfigurable, and hence itself represents at least partly the device (9) for generating an evaluable image.

2. Optoelectronic angle sensor (1) according to Claim 1, **characterized in that** the coding (3) has a multiplicity of organic light emitting diodes.

3. Optoelectronic angle sensor (1a, 1b) according to Claim 1 or 2, **characterized in that** the coding (3) is in the form of an electroluminescent film.

4. Optoelectronic angle sensor (1) according to any of the preceding claims, **characterized by** the coding (3) having a pattern comprising luminous and nonluminous regions.

5. Optoelectronic angle sensor (1) according to any of the preceding claims, **characterized by** the coding (3) having a pattern with regions in which light of different wavelengths is emitted.

6. Optoelectronic angle sensor (1) according to any of the preceding claims, **characterized in that** a change in a pattern of the coding (3) is effected in a time-controlled, event-controlled and/or requirement-dependent manner, in particular depending on a rotational speed during a movement of the code carrier (2) relative to the detector (4).

7. Optoelectronic angle sensor (1) according to any of the preceding claims, **characterized in that** a change in a pattern of the coding (3) is effected with respect to
• a wavelength of the emitted light and/or
• a resolution of the coding (3).

8. Optoelectronic angle sensor (1) according to any of the preceding claims, **characterized in that** the angle sensor (1) has a plurality of alternatively settable modes, the coding being differently configured for each of the modes.

9. Optoelectronic angle sensor (1) according to Claim 8, **characterized in that** an angle sensor initialisation mode is provided as one of the plurality of modes, in which mode the coding (3) has a pattern especially suitable for determining an angle zero position.

10. Optoelectronic angle sensor (1) according to any of the preceding claims, **characterized in that** a reconfiguration of the coding (3) for compensating known measurement errors, in particular due to out-of-true running during a rotational movement of the code carrier (2) relative to the detector (4), is provided.

11. Optoelectronic angle sensor (1) according to any of the preceding claims, **characterized by** the device (9) additionally having a deflection means (8) for deflected projection of the image onto the detector (4).

12. Optoelectronic angle sensor (1) according to Claim 7, **characterized in that** the deflection means (8) is formed for focusing the image onto the detector (4).

13. Optoelectronic angle sensor (1) according to any of the preceding claims, **characterized in that** the detector (4) is in the form of a scanning film (4a), in particular comprising organic photodiodes or photocells.

## Revendications

1. Détecteur d'angle optoélectronique (1) pour déterminer un angle de rotation autour d'un axe (6) avec
• un support de code (2) avec un codage en surface (3),
• un détecteur photosensible (4), le support de code (2) et le détecteur (4) étant mobiles l'un par rapport à l'autre autour de l'axe (6),
• un dispositif (9) pour générer une image exploitable d'au moins une partie du codage sur le détecteur (4) de telle manière que le codage contient une information sur une position de rotation du support de code (2) par rapport au détecteur (4) et
• une unité d'évaluation (5) pour déterminer l'angle de rotation de l'image,
**caractérisé en ce que** le codage (3) est configuré autoéclairant et librement configurable par une unité de commande (7) du détecteur d'angle optoélectronique (1) et reconfigurable et représente ainsi lui-même au moins partiellement le dispositif (9) pour générer une image exploitable.

2. Détecteur d'angle optoélectronique (1) selon la revendication 1, **caractérisé en ce que** le codage (3) présente une multitude de diodes électroluminescentes organiques.

3. Détecteur d'angle optoélectronique (1a, 1b) selon la revendication 1 ou 2, **caractérisé en ce que** le codage (3) est configuré comme une feuille électroluminescente.

4. Détecteur d'angle optoélectronique (1) selon l'une des revendications précédentes, **caractérisé en ce que** le codage (3) présente un motif de zones lumineuses et non lumineuses.

5. Détecteur d'angle optoélectronique (1) selon l'une des revendications précédentes, **caractérisé par le fait que** le codage (3) présente un motif avec des zones dans lesquelles la lumière est émise avec différentes longueurs d'ondes.

6. Détecteur d'angle optoélectronique (1) selon l'une des revendications précédentes, **caractérisé en ce qu'**une modification d'un motif du codage (3) se fait en étant déclenchée par le temps, déclenchée par un événement et/ou en fonction d'une exigence, en particulier en fonction d'une vitesse de rotation lors d'un mouvement du support de code (2) par rapport au détecteur (4).

7. Détecteur d'angle optoélectronique (1) selon l'une des revendications précédentes, **caractérisé en ce qu'**une modification d'un motif du codage (3) se fait pour ce qui est
• d'une longueur d'onde de la lumière émise et/ou
• d'une résolution du codage (3).

8. Détecteur d'angle optoélectronique (1) selon l'une des revendications précédentes, **caractérisé en ce que** le détecteur d'angle présente plusieurs modes réglables au choix, le codage (3) étant configuré différemment pour chacun des modes.

9. Détecteur d'angle optoélectronique (1) selon la revendication 8, **caractérisé en ce qu'**un mode d'initialisation du détecteur d'angle est prévu comme l'un des plusieurs modes dans lequel le codage (3) présente un motif approprié spécialement pour fixer une position de zéro de l'angle.

10. Détecteur d'angle optoélectronique (1) selon l'une des revendications précédentes, **caractérisé en ce qu'**une reconfiguration du codage (3) est prévue pour la compensation d'erreurs de mesure connues, en particulier dues à des imprécisions de concentricité lors d'un mouvement de rotation du support de code (2) par rapport au détecteur (4).

11. Détecteur d'angle optoélectronique (1) selon l'une des revendications précédentes, **caractérisé par le fait que** le dispositif (9) présente en plus un moyen de déviation (8) pour la projection déviée de l'image sur le détecteur (4).

12. Détecteur d'angle optoélectronique (1) selon la revendication 11, **caractérisé en ce que** le moyen de déviation (8) est focalisé pour la déviation de l'image sur le détecteur (4).

13. Détecteur d'angle optoélectronique (1) selon l'une des revendications précédentes, **caractérisé en ce que** le détecteur (4) est configuré comme une feuille de balayage (4a) en particulier avec des photodiodes organiques ou des cellules photoélectriques.
